**Europäisches Patentamt**

**European Patent Office**

**Office européen des brevets**

(19)

(11) Numéro de publication: **0 179 078**
**B1**

(12) # FASCICULE DE BREVET EUROPÉEN

(45) Date de publication du fascicule du brevet:
21.09.88

(51) Int. Cl.⁴: **F 03 B 1/04**

(21) Numéro de dépôt: **85901343.5**

(22) Date de dépôt: **11.04.85**

(86) Numéro de dépôt international:
**PCT/CH 85/00059**

(87) Numéro de publication internationale:
**WO 85/04928 (07.11.85 Gazette 85/24)**

(54) **Turbine hydraulique à roue denoyée munie d'un injecteur.**

(30) Priorité: **16.04.84 FR 8406092**

(43) Date de publication de la demande:
**30.04.86 Bulletin 86/18**

(45) Mention de la délivrance du brevet:
**21.09.88 Bulletin 88/38**

(84) Etats contractants désignés:
**AT BE CH DE FR GB IT LI LU NL SE**

(56) Documents cité:
**CH-A-164 622**
**FR-A-748 852**
**FR-A-848 560**
**GB-A-240 262**
**US-A-2 497 508**
**US-A-4 123 102**

(73) Titulaire: **RADISA RECHERCHE APPLIQUEE ET DEVELOPPEMENT INDUSTRIEL S.A., 4, rue Etraz, CH- 1003 Lausanne (CH)**

(72) Inventeur: **HENRY, Pierre, Chemin de Bellevue, CH- 1053 Cugy (CH)**

(74) Mandataire: **Nithardt, Roland, CABINET ROLAND NITHARDT Rue Edouard Verdan 15, CH- 1400 Yverdon- les- Bains (CH)**

## Description

La présente invention concerne une turbine hydraulique à roue dénoyée munie d'un injecteur, cet injecteur comportant un conduit d'injection présentant au moins une section rectangulaire et un organe de réglage monté dans le conduit d'injection de manière à pivoter autour d'un axe perpendiculaire à la direction d'écoulement de l'eau et à obturer ledit conduit partiellement ou totalement selon sa position angulaire, l'organe de réglage comportant une plaque d'obturation de forme rectangulaire dont les dimensions correspondent à celles de la section à obturer, l'axe de pivotement de l'organe de réglage se trouvant à l'extérieur de ladite plaque d'obturation.

L'invention s'applique en particulier à une turbine du type à flux traversant.

Dans une turbine à roue dénoyée, notamment du type à flux traversant, un injecteur remplit généralement deux fonctions. Sa fonction essentielle consiste à transformer en énergie cinétique la plus grande partie possible de l'énergie de pression disponible à l'amont. Cependant, il sert aussi à régler le débit, par l'obturation partielle d'une section de passage de l'eau. Dans une turbine à flux traversant, dont la roue présente extérieurement la forme d'une cage cylindrique, l'injecteur délivre sur la roue une lame d'eau de section sensiblement rectangulaire dont la largeur est égale à la largeur de la roue et dont l'épaisseur est reglée par un organe mobile. Généralement, cet organe est capable d'obturer complètement une section de sortie de l'injecteur et il peut remplir ainsi la fonction d'une vanne.

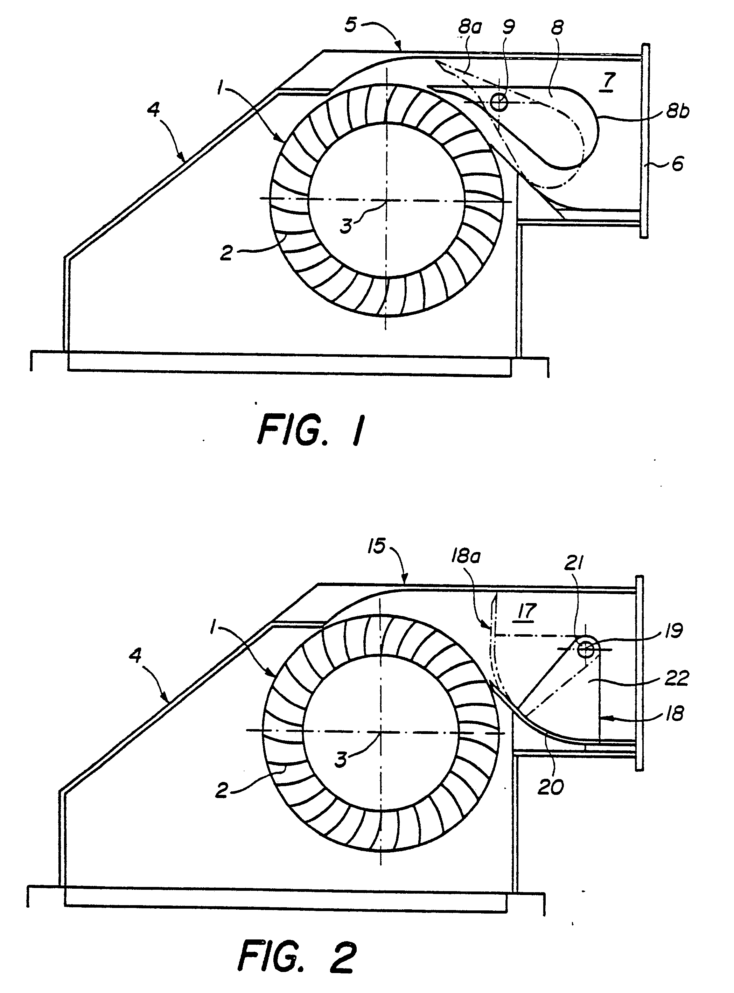

On connait un type d'injecteur dans lequel l'organe de réglage est une aube directrice disposée approximativement au milieu de l'épaisseur de la lame d'eau et montée sur pivots à ses deux extrémités. Une telle aube directrice, qui sera décrite plus loin en référence à la fig. 1, doit avoir un profil en forme de goutte, avec une partie antérieure renflée afin de présenter un profil hydrauliquement favorable dans toutes ses positions. Dans certaines positions, il en résulte un couple de fermeture relativement élevé sur l'axe de l'aube directrice, s'accompagnant d'une augmentation des dimensions et du coût des organes de commande.

D'autre part, une aube directrice de ce genre présente un profil de forme complexe dont l'usinage est particulièrement onéreux. Or elle est destinée précisément à un type de turbine peu coûteux en soi, qu'elle renchérit inutilement.

Pour éviter ces inconvénients, le FR-A-748 852 décrit une turbine centripète correspondant au préambule de la revendication 1. L'organe de réglage est une sorte de volet plat ou incurvé qui, en position ouverte, se plaque contre une paroi du conduit d'injection. Il est monté dans ce conduit d'une manière pivotante autour d'un axe disposé latéralement par rapport à l'écoulement de l'eau, derrière le bord amont de la plaque d'obturation. De ce fait, cet organe de réglage nécessite un fort couple de fermeture dans toutes les positions, y compris en position fermée.

Pour obtenir un faible couple de manoeuvre, le US-A-2 497 508 propose un injecteur de turbine dont l'organe de réglage comprend un bloc pivotant autour d'un axe transversal situé du côté aval du bloc par rapport au sens d'écoulement. En pivotant vers l'intérieur du conduit d'injection, le bloc obture progressivement l'écoulement par sa face frontale amont. Comme celle-ci est sensiblement perpendiculaire au conduit, elle crée un rétrécissement abrupt du passage, donc une sensible perte de charge.

Par conséquent, la présente invention a pour but de fournir une turbine munie d'un injecteur du type mentionné plus haut, comportant un organe de réglage pivotant qui peut être manoeuvré avec un faible couple et qui permet un bon rendement de la turbine à différents régimes, tout en étant de construction simple et peu coûteuse.

Dans ce but, la turbine selon l'invention est caractérisée en ce que le conduit d'injection comporte une portion de paroi en forme de segment cylindrique, dont l'axe coïncide avec l'axe de pivotement de l'organe de réglage, cet axe se trouvant en amont de cette plaque par rapport au sens de l'écoulement de l'eau, et en ce qu'une partie de l'organe de réglage est constamment en contact avec cette portion de paroi.

Selon une forme de réalisation avantageuse, la plaque d'obturation est d'épaisseur sensiblement constante. Elle comporte au moins une partie cintrée en forme de segment cylindrique dont l'axe coïncide avec l'axe de pivotement. Elle peut comporter également une partie plane à proximité de son bord aval.

D'autre part, l'organe de réglage comporte de préférence, à chacune de ses extrémites, un tourillon qui est monté dans un pivot solidaire du conduit d'injection, et un flasque constitué par une plaque plane qui est solidaire du tourillon et de la plaque d'obturation. Ainsi, la plus grande partie de l'organe de réglage peut être réalisée avec des tôles soudées.

Selon une variante destinée à supporter des efforts plus importants, l'organe de réglage peut comporter un arbre situé entre les deux tourillons, et une série de flasques solidaires dudit arbre et de la plaque d'obturation, ces flasques étant constitués par des plaques planes.

La présente invention sera mieux comprise en référence à la description, donnée ci-dessous à titre d'exemple, d'une forme de réalisation avantageuse d'un injecteur pour turbine à flux traversant, à l'aide des dessins annexés, dans lesquels:

La figure 1 est une vue en coupe schématique d'une turbine à flux traversant équipée d'un injecteur selon l'art antérieur,

La figure 2 est une vue en coupe schématique d'une turbine à flux traversant équipée d'un injecteur selon l'invention,

La figure 3 est une vue latérale de détail de l'injecteur représenté sur la fig. 2, l'organe de réglage étant en position d'ouverture complète,

La figure 4 est une vue analogue à la fig. 3, l'organe de réglage étant en position d'ouverture partielle, et

La fig. 5 représente les variations du rendement énergétique en fonction du débit volume relatif.

La fig. 1 représente un exemple de turbine à flux traversant équipée d'un injecteur selon l'art antérieur. La turbine comporte une roue 1 présentant la forme générale d'une cage cylindrique, avec une série d'aubes 2 qui sont disposées à la périphérie et dont les génératrices sont parallèles à l'axe de rotation 3 de la roue. Cette roue est montée à l'intérieur d'un capot 4. A l'amont de la roue 1, un injecteur 5, dont l'entrée 6 est raccordée à la conduite d'amenée, est fixé sur le capot 4 de manière à diriger l'eau sur la roue 1 avec la plus grande vitesse possible et selon un angle d'incidence optimal. A l'intérieur de l'injecteur, l'eau circule dans un conduit d'injection 7 dont la section, sensiblement rectangulaire, diminue de hauteur lorsqu'on se rapproche de la roue 1.

Pour régler le débit de l'eau, donc la puissance de la turbine, l'injecteur comporte un organe de réglage se présentant sous la forme d'une aube directrice 8 montée à l'intérieur du conduit d'injection 7 de manière à pouvoir pivoter autour d'un axe 9 parallèle à l'axe 3 de la roue 1. L'axe 9 traverse longitudinalement l'aube directrice. En pivotant, l'aube directrice 8 obture partiellement ou totalement le conduit d'injection 7 tout en orientant favorablement la lame d'eau. Dans la position 8a dessinée en traits mixtes, l'aube directrice 8 obture complètement le conduit d'injection.

Afin de présenter un profil hydrauliquement favorable dans toutes les positions et de permettre ainsi un rendement satisfaisant de la turbine sous charge partielle, l'aube directrice 8 doit présenter un profil en forme de goutte avec une partie antérieure 8b renflée qui se trouve nettement à l'amont de l'axe de pivotement 9. De ce fait, dans certaines positions de l'aube directrice, la poussée hydrodynamique provoque un couple de fermeture relativement élevé sur l'axe de pivotement 9, (ce qui nécessite des organes de commande relativement puissants et coûteux.

D'autre part, la réalisation d'une aube directrice présentant le profil représenté sur la fig. 1 doit se faire généralement sous la forme d'une pièce moulée qui fait l'objet d'un usinage ultérieur délicat et onéreux.

La fig. 2 représente une turbine à flux traversant identique à celle de la fig. 1, équipée cependant d'un injecteur 15 selon la présente invention. Cet injecteur comporte un conduit d'injection 17 similaire dans son principe à celui de la fig. 1, en revanche il est équipé d'un organe de réglage 18 qui est différent. Cet organe de réglage, qui peut pivoter autour d'un axe 19 parallèle à l'axe de rotation 3 de la roue, est constitué essentiellement par une plaque d'obturation 20 qui est rendue solidaire de deux tourillons latéraux 21 par des flasques 22. Sur la fig. 2 l'organe de réglage 18 est représenté en trait continu dans sa position d'ouverture complète, et en traits mixtes dans sa position de fermeture 18a. Afin d'obturer complètement le conduit d'injection 17 dans cette dernière position, la plaque d'obturation 20 présente une forme rectangulaire dont les dimensions correspondent à celles de la section à obturer. Pour régler le débit de l'eau, l'organe de réglage 18 peut prendre n'importe quelle position intermédiaire entre les deux positions illustrées sur la fig. 2. Il faut noter que, contrairement à l'art antérieur décrit ci-dessus, l'axe de pivotement 19 se trouve à l'extérieur de la plaque d'obturation, ce qui permet à cette plaque de se déplacer en glissant le long d'une paroi de l'injecteur.

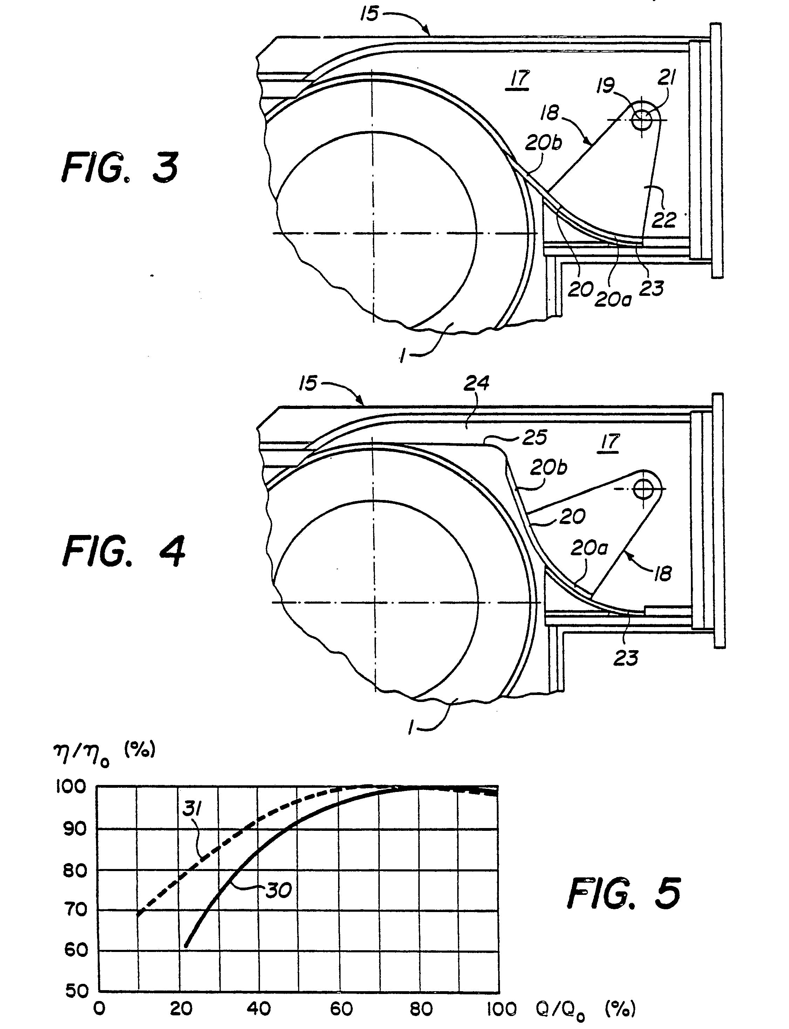

La fig. 3 représente plus en détail l'injecteur 15 de la fig. 2, vu de côté après enlèvement d'une de ses parois latérales. On remarque que la plaque d'obturation 20 présente, de profil, une partie cintrée 20a et une partie rectiligne 20b située à proximité du bord aval de la plaque. La partie cintrée 20a à la forme d'un segment cylindrique dont l'axe coïncide avec l'axe de pivotement 19 de l'organe de réglage. Dans la position d'ouverture complète représentée ici, cette partie cintrée 20a est en contact sur toute sa surface avec une plaque de guidage 23 qui constitue un élément de la paroi inférieure du conduit d'injection 17. Ainsi, la plaque d'obturation 20 se trouve contre la paroi inférieure du conduit d'injection et ne subit donc les effets dynamiques de l'eau que sur sa face supérieure. Grâce à sa forme cylindrique centrée sur l'axe de pivotement 19, la partie cintrée 20a de la plaque d'obturation 20 subit une pression radiale qui ne provoque aucun moment par rapport à l'axe de pivotement 19. Seule la force de frottement, relativement faible, exercée par l'eau sur cette partie de la plaque provoque un moment de fermeture. Celui-ci est partiellement compensé par la pression normale de l'eau sur la partie rectiligne 20b de la plaque d'obturation. En jouant sur les dimensions respectives des deux parties 20a et 20b, il est possible d'annuler, pour un régime de fonctionnement donné, le moment provoqué par la poussée de l'eau sur l'organe de réglage 18 par rapport à l'axe de pivotement 19. Pour les autres régimes de fonctionnement, ce moment reste toujours très faible puis qu'il dépend essentiellement du frottement et non pas de la pression.

La plaque d'obturation 20 est réalisée de façon très simple, au moyen d'une tôle cintrée. Les flasques 22 qui relient les deux extrémités de cette plaque aux tourillons 21 sont constitués par des tôles planes qui sont soudées sur le tourillon respectif et sur la plaque d'obturation. Il est évident que cette construction extrêmement simple de l'organe de réglage 18 permet de la fabriquer pour un prix considérablement inférieur à celui d'une aube directrice.

Sur la fig. 4, l'injecteur 15 est représenté avec son organe de réglage 18 placé en position intermédiaire. Dans cette position, la plaque d'obturation 20 obture la partie inférieure du conduit d'injection 17 et elle dirige vers la roue 1 une lame d'eau 24 qui présente un profil inférieur incurvé 25. Seule une portion de la partie cintrée 20a de la plaque d'obturation est encore en contact avec la plaque de guidage 23. Cependant, grâce au contact entre ces deux plaques, il n'y à pas d'écoulement d'eau notable entre elles. De même, l'ajustement des bords de la plaque d'obturation 20 contre les parois latérales du conduit d'injection 17 assure une étanchéité relative, mais suffisante pour réduire à zéro la puissance de la turbine quand l'organe de réglage est en position fermée.

Il est évident que, dans le cas d'un injecteur relativement large et/ou soumis à une pression relativement forte, la plaque d'obturation 20 peut être soumise à des efforts considérables, entraînant des déformations excessives. On peut remédier facilement à cet état de choses en fixant l'organe de réglage sur un arbre qui traverse le canal d'injection entre les deux tourillons 21. La plaque d'obturation peut alors être reliée à cet arbre par une série de flasques constitués par des plaques planes soudées sur l'arbre et la plaque d'obturation. Eventuellement, l'arbre peut être logé dans une cavité ménagée dans la paroi supérieure du conduit d'injection.

Les organes de commande de l'injecteur 15, non représentés, sont connus en soi. Ils se trouvent à l'extérieur du conduit d'injection 17 et agissent sur les tourillons 21. Grâce à la forme particulière de l'organe de réglage selon l'invention, le couple de manoeuvre est particulièrement modéré, ce qui permet d'utiliser des organes de commande légers et peu coûteux. Ainsi, les dispositions selon l'invention permettent de simplifier notablemment la fabrication d'une turbine à flux traversant et de réduire sensiblement son coût de fabrication.

Bien qu'un injecteur selon la présente invention soit de construction plus simple qu'un injecteur à aube directrice, il permet d'obtenir un rendement énergétique au moins équivalent. La fig. 5 illustre une comparaison des caractéristiques typiques de rendement, mesurées sur deux injecteurs comparables équipés d'organes de réglage différents. Sur ce diagramme, on à porté en abscisse le débit volume relatif et en ordonnée un rendement relatif. La courbe 30 représente le rendement relatif d'une turbine équipée d'un injecteur à aube directrice, du type illustré par la fig. 1, tandis que la courbe 31 en traits interrompus représente le rendement relatif d'une turbine équipée d'un injecteur selon l'invention, du type illustré par la fig. 2. On peut observer que l'injecteur selon l'invention permet un rendement élevé dans une plage de régimes qui est plus large qu'avec un injecteur selon l'art antérieur.

Ainsi pour une turbine appelée à fonctionner fréquemment sous charge partielle, l'injecteur selon l'invention présente le double avantage fonctionnel d'offrir un rendement favorable et d'exiger un faible couple de manoeuvre. Dans tous les cas, il est sensiblement plus facile à réaliser qu'un injecteur selon l'art antérieur.

**Revendications**

Turbine hydraulique à roue dénoyée munie d'un injecteur, cet injecteur (15), comportant un conduit d'injection (17) présentant au moins une section rectangulaire et un organe de réglage (18) monté dans le conduit d'injection de manière à pivoter autour d'un axe perpendiculaire à la direction d'écoulement de l'eau et à obturer ledit conduit partiellement ou totalement selon sa position angulaire, l'organe de réglage (18) comportant une plaque d'obturation (20) de forme rectangulaire dont les dimensions correspondent à celles de la section à obturer, l'axe de pivotement (19) de l'organe de réglage se trouvant à l'extérieur de ladite plaque d'obturation, caractérisée en ce que le conduit d'injection (17) comporte une portion de paroi (23) en forme de segment cylindrique, dont l'axe coïncide avec l'axe de pivotement (19) de l'organe de réglage (18), cet axe (19) se trouvant en amont de cette plaque par rapport au sens de l'écoulement de l'eau, et en ce qu'une partie de l'organe de réglage est constamment en contact avec cette portion de paroi.

2. Turbine selon la revendication 1, caractérisée en ce que la plaque d'obturation (20) est d'épaisseur sensiblement constante.

3. Turbine selon la revendication 4, caractérisée en ce que la plaque d'obturation (20) comporte au moins une partie cintrée (20a) en forme de segment cylindrique dont l'axe coïncide avec l'axe de pivotement (19).

4. Turbine selon la revendication 2, caractérisée en ce que la plaque d'obturation (20) comporte une partie plane (20b) à proximité de son bord aval.

5. Turbine selon la revendication 1, caractérisée en ce que l'organe de réglage (18) comporte, à chacune de ses extrémités, un tourillon (21) qui est monté dans un pivot solidaire du conduit d'injection (17).

6. Turbine selon la revendication 5, caractérisée en ce que l'organe de réglage (18) comporte, à chacune de ses extrémités, un flasque (22) constitué par une plaque plane, solidaire du tourillon (21) et de la plaque d'obturation (20).

7. Turbine selon la revendication 5, caractérisée en ce que l'organe de réglage (18) comporte un arbre situé entre les deux tourillons (21) et une série de flasques solidaires dudit arbre et de la plaque d'obturation (20), ces flasques étant constitués par des plaques planes.

8. Turbine selon l'une quelconque des revendications précédentes, caractérisée en ce qu'elle est du type à flux traversant.

## Patentansprüche

1. Hydraulische Turbine mit trockenlaufendem Laufrad und mit Injektor, wobei dieser Injektor (15) aus einem Einspritzkanal (17) besteht, der mindestens eine rechteckige Sektion aufweist, sowie einem Regelorgan (18), das in dem Einspritzkanal derart montiert ist, daß es um eine zur Fließrichtung des Wassers senkrecht stehende Achse drehbar ist und den genannten Kanal ganz oder teilweise gemäß seiner Winkelstellung verschließen kann, wobei das Regelorgan (18) eine Verschlußplatte (20) rechteckiger Form aufweist, deren Abmessungen mit denen der zu verschließenden Sektion übereinstimmen, wobei sich die Drehachse (19) des Regelorgans außerhalb der genannten Verschlußplatte befindet,
dadurch gekennzeichnet, daß
der Einspritzkanal (17) eine Zwischenwand (23) in Form eines Kreissegments aufweist, deren Achse mit der Drehachse (19) des Regelorgans (18) deckungsgleich ist, wobei sich diese Achse (19) im Verhältnis zur Flußrichtung des Wassers oberhalb dieser Platte befindet, derart, daß ein Teil des Regelorgans ständig in Kontakt mit dieser Zwischenwand ist.

2. Turbine gemäß Anspruch 1,
dadurch gekennzeichnet, daß
die Verschlußplatte (20) eine ungefähr gleichmäßige Dicke aufweist.

3. Turbine gemäß Anspruch 2,
dadurch gekennzeichnet, daß
die Verschlußplatte (20) mindestens eine rundbogenartige Partie (20a) in Form eines Kreissegments aufweist, deren Achse mit der Drehachse (19) deckungsgleich ist.

4. Turbine gemäß Anspruch 2,
dadurch gekennzeichnet, daß
die Verschlußplatte (20) aus einer planen Partie (20b) besteht, die an ihr stromabwärtiges Ende angrenzt.

5. Turbine gemäß Anspruch 1,
dadurch gekennzeichnet, daß
das Regelorgan (18) an jeder seiner Seiten einen Lagerzapfen aufweist, der in einem Drehlager, das mit dem Einspritzkanal (17) verbunden ist, montiert ist.

6. Turbine gemäß Anspruch 5,
dadurch gekennzeichnet, daß
das Regelorgan (18) an jeder seiner Seiten eine Wange (22) aufweist, die aus einer planen Platte gebildet wird, die mit dem Lagerzapfen und der Verschlußplatte (20) verbunden ist.

7. Turbine gemäß Anspruch 5,
dadurch gekennzeichnet, daß
das Regelorgan (18) eine Welle aufweist, die zwischen den beiden Lagerzapfen (21) angeordnet ist und eine Reihe von Wangen, die mit der genannten Welle und der Verschlußplatte (20) verbunden sind, wobei diese Wangen aus planen Platten gebildet werden.

8. Turbine gemäß eines beliebigen Anspruches der genannten Ansprüche,
dadurch gekennzeichnet, daß
sie vom Typ einer Querstromturbine ist.

## Claims

1. Hydraulic turbine with a free-flow wheel having an injector, this injector (15) comprising an injection duct (17) having at least one rectangular section and a control device (18) mounted in the injection duct so as to pivot about an axis perpendicular to the direction of water flow and to close said duct partially or completely, depending on it's angular position, the control device (18) comprising an obturator plate (20) of rectangular shape having dimensions corresponding to those of the section to be closed, the pivoting axis (19) of the control device being located outside the said obturator plate, characterized in that the injection duct (17) comprises a wall portion (23) in the form of a cylindrical segment, the axis of which coincides with the pivoting axis (19) of the control device (18), this axis (19) being upstream of this plate with respect to the direction of water flow, and in that a part of the control device is constantly in contact with this wall portion.

2. Turbine according to claim 1, characterized in that the obturator plate (20) is of substantially constant thickness.

3. Turbine according to claim 2, characterized in that the obturator plate (20) comprises at least one curved portion (20a) in the form of a cylindrical segment, the axis of which coincides with the pivoting axis (19).

4. Turbine according to claim 2, characterized in that the obturator plate (20) comprises a plane portion (20b) close to its trailing edge.

5. Turbine according to claim 1, characterized in that the control device (18) comprises, at each of its extremities, a pivot pin (21) which is mounted in a pivot solid with the injection duct (17).

6. Turbine according to claim 5, characterized in that the control device (18) comprises, at each of its extremities, a flange (22) consisting of a plane plate, solid with the pivot pin (21) and with the obturator plate (20).

7. Turbine according to claim 5, characterized in that the control device (18) comprises a shaft situated between the two pivot pins (21) and a series of flanges solid with said shaft and with the obturator plate (20), these flanges consisting of plane plates.

8. Turbine according to any one of the preceding claims, characterized in that it is a turbine of the cross-flow type.

0 179 078

FIG. 1

FIG. 2

1

FIG. 3

FIG. 4

FIG. 5